# EUROPEAN PATENT APPLICATION

(11) **EP 4 694 105 A1**
(43) Date of publication of application: **11.02.2026**
(21) Application number: 23949376.0
(22) Date of filing: 22.08.2023
(51) Int. Cl.: H04M 3/56

(54) **CALL SYSTEM, CALL HOST, AND CALL TERMINAL**

(71) Applicant: Shenzhen Hollyland Technology Co., Ltd., Shenzhen, Guangdong 518108 (CN)
(72) Inventor: LIU, Dezhi, Shenzhen, Guangdong 518108 (CN); ZHANG, Haiyan, Shenzhen, Guangdong 518108 (CN)
(74) Representative: Grünecker Patent- und Rechtsanwälte PartG mbB
(86) International application number: PCT/CN2023/114218
(87) International publication number: WO 2025/039183

(57) **Abstract**

Embodiments of the present description provide a call system, a call host, and a call terminal. The call system comprises a call host and a plurality of call terminals. The plurality of call terminals are grouped into one or more call groups; at least some call terminals among the plurality of call terminals are configured to acquire voice signals of users and send the voice signals to the call host; the call host is configured to perform, for each call group, voice mixing processing on the voice signals sent by the call terminals in the call group, to obtain a mixed signal and send the mixed signal to each call terminal in the call group; at least some of the call terminals are further configured to perform silencing processing on the received mixed signal, so as to eliminate the voice signals acquired by said call terminals, and play the mixed signal that has undergone the silencing processing. The method can improve the utilization rate of communication time slots, increase the number of call terminals in the call system, and in addition, reduce the power consumption of the call host.

## Description

### TECHNICAL FIELD

The present specification relates to the field of communications technologies, and in particular, to an intercom system, an intercom host, and an intercom terminal.

### BACKGROUND

In scenarios such as movie shooting, stage performance, and large-scale activities, a wireless intercom system is generally required to implement communication among field staff, thereby completing organization scheduling of work. Generally, the wireless intercom system includes an intercom host and a plurality of intercom terminals (for example, Portable Units) that can be wirelessly connected to the intercom host. The intercom terminals may collect and send voice signals of users to the intercom host. And the intercom host may perform audio mixing processing on the received voice signals. That is, for each of the intercom terminals, the intercom host performs audio mixing processing on the voice signals sent by other intercom terminals except the intercom terminal, and then forwards the mixed audio signal to the intercom terminal.

To ensure that each of the intercom terminals can be in a full-duplex communication mode, the plurality of intercom terminals usually work in different communication timeslots in a time division manner. The voice signals sent by the intercom terminals to the intercom host are different, so each intercom terminal needs to occupy one uplink timeslot. And the mixed audio signals sent by the intercom host to each intercom terminal are also different, thus, each intercom terminal further needs to occupy one downlink timeslot. The number of timeslots of each data transmission frame is limited and each intercom terminal needs to occupy two timeslots, therefore, the number of intercom terminals supported by one intercom system is limited, and the number of intercom users cannot be increased. In addition, each intercom terminal needs to occupy one downlink timeslot, as the number of intercom terminals increases, transmission power consumption of the intercom host increases, so that when the number of intercom terminals is relatively large, battery power consumption of the intercom host is relatively fast, and operation duration is limited.

### SUMMARY

Based on this, an intercom system, an intercom host, and an intercom terminal are provided in the embodiments of the present specification.

According to a first aspect of embodiments of the present specification, an intercom system is provided, where the intercom system includes an intercom host and a plurality of intercom terminals, the intercom host is wirelessly connected to the plurality of intercom terminals respectively, and the plurality of intercom terminals are divided into one or more talk groups;
at least part of the plurality of intercom terminals are configured to collect voice signals of users, and send the voice signals to the intercom host;
the intercom host is configured to perform, for each of the talk groups, audio mixing processing on the voice signals sent by the intercom terminals in the talk group, to obtain a mixed audio signal, and send the mixed audio signal to each of the intercom terminals in the talk group;
each of the at least part of the plurality of intercom terminals is further configured to perform audio elimination processing on a mixed audio signal received by the present intercom terminal to eliminate the voice signal collected by the present intercom terminal, and play back the mixed audio signal after the audio elimination processing.

According to a second aspect of the embodiments of this specification, an intercom host is provided, where the intercom host is communicatively connected to a plurality of intercom terminals respectively, and the plurality of intercom terminals are divided into one or more talk groups;
the intercom host is configured to: receive, voice signals collected by at least part of the plurality of intercom terminals; perform, for each of the talk groups, audio mixing processing on the voice signals sent by the intercom terminals in the talk group, to obtain an mixed audio signal; and send the mixed audio signal to each of the intercom terminals in the talk group, so that each of the at least part of the plurality of intercom terminals is further configured to perform audio elimination processing on a mixed audio signal received by the present intercom terminal to eliminate the voice signal collected by present the intercom terminal, and play back the mixed audio signal after the audio elimination processing.

According to a third aspect of the embodiments of this specification, an intercom terminal is provided, where the intercom terminal is communicatively connected to an intercom host;
the intercom terminal is configured to: collect a voice signal of a user, and send the voice signal to the intercom host, so that the intercom host performs audio mixing processing on received voice signals to obtain an mixed audio signal; and receive the mixed audio signal sent by the intercom host, perform audio elimination processing on the received mixed audio signal to eliminate the voice signal collected by the present intercom terminal, and play back the mixed audio signal after the audio elimination processing.

By applying the schemes of the embodiments of the present disclosure for the same talk group, after receiving the voice signals sent by each of the intercom terminals in the group, the intercom host may perform audio mixing processing on the voice signals sent by all of the intercom terminals in the group, to obtain a unified mixed audio signal, and then may broadcast the unified mixed audio signal to each of the intercom terminals in the group through one downlink timeslot. The mixed audio signal received by the intercom terminal may include the voice signal collected by the present intercom terminal, thus, after receiving the mixed audio signal, the intercom terminal may perform audio elimination processing on the mixed audio signal to eliminate the voice signal collected by the present intercom terminal, so that the intercom terminal can play back only the voice signals collected by other intercom terminals in the group. Compared with that each intercom terminal needs to be allocated with one downlink timeslot separately, the intercom terminals in the same group may share one downlink timeslot in this manner, improving timeslot utilization. And more timeslots can be vacated for use as uplink timeslots, that is, each intercom host can be connected to more intercom terminals, and the number of intercom users in the intercom system can be increased. In addition, for each of the talk groups, the intercom host only needs to transmit one-way mixed audio signal, which can also save the power consumption of the intercom host and prolong the usage duration of the battery.

It should be understood that the foregoing general description and the following detailed description are merely examples and explanations, and cannot limit the present specification.

### BRIEF DESCRIPTION OF DRAWINGS

The accompanying drawings, which are incorporated in and constitute a part of the present specification, illustrate embodiments consistent with the present specification and, together with the description, serve to explain the principles of the present specification.
FIG. 1 is a schematic diagram of audio mixing logic of an intercom host of a wireless intercom system in the prior art.
FIG. 2 is a schematic diagram of timeslot allocation in a wireless intercom system in the prior art.
FIG. 3 is a schematic structural diagram illustrating an intercom system, according to an embodiment of the present specification.
FIG. 4 is a schematic diagram illustrating audio elimination processing performed by an intercom terminal, according to an embodiment of the present specification.
FIG. 5 is a schematic structural diagram illustrating an intercom system, according to an embodiment of the present specification.
FIG. 6 is a schematic structural diagram illustrating an intercom system, according to an embodiment of the present specification.
FIG. 7 is a schematic structural diagram illustrating an intercom system, according to an embodiment of the present specification.

### DETAILED DESCRIPTION

Exemplary embodiments will be described in detail herein, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the present specification. Instead, they are merely examples of devices and methods consistent with some aspects of the present specification as detailed in the appended claims.

The terminologies used herein are for the purpose of describing particular embodiments only and are not intended to be limiting of the specification. As used in this specification and the appended claims, the singular forms "a", "said" and "the" are intended to include the plural forms as well, unless the context clearly indicates otherwise. It will also be understood that the term "and/or" as used herein refers to and encompasses any and all possible combinations of one or more of the associated listed items.

It should be understood that although the terms "first", "second", "third", etc. may be used in this specification to describe various information, the information should not be limited to these terms. These terms are only used to distinguish the same type of information from each other. For example, without departing from the scope of this specification, first information may also be referred to as second information, and similarly, second information may also be referred to as first information. Depending on the context, the word "if" as used herein may be interpreted as "when" or "upon" or "in response to determining".

In scenarios such as movie shooting, stage performance, and large-scale activities, a wireless intercom system is generally required to implement communication among field staff, thereby completing organization scheduling of work. Generally, the wireless intercom system includes an intercom host and a plurality of intercom terminals (for example, Portable Units) that can be wirelessly connected to the intercom host. The intercom terminals may collect and send voice signals of users to the intercom host. And the intercom host may perform audio mixing processing on the received voice signals. That is, for each of the intercom terminals, the intercom host performs audio mixing processing on the voice signals sent by other intercom terminals except the intercom terminal, and then forwards the mixed audio signal to the intercom terminal.

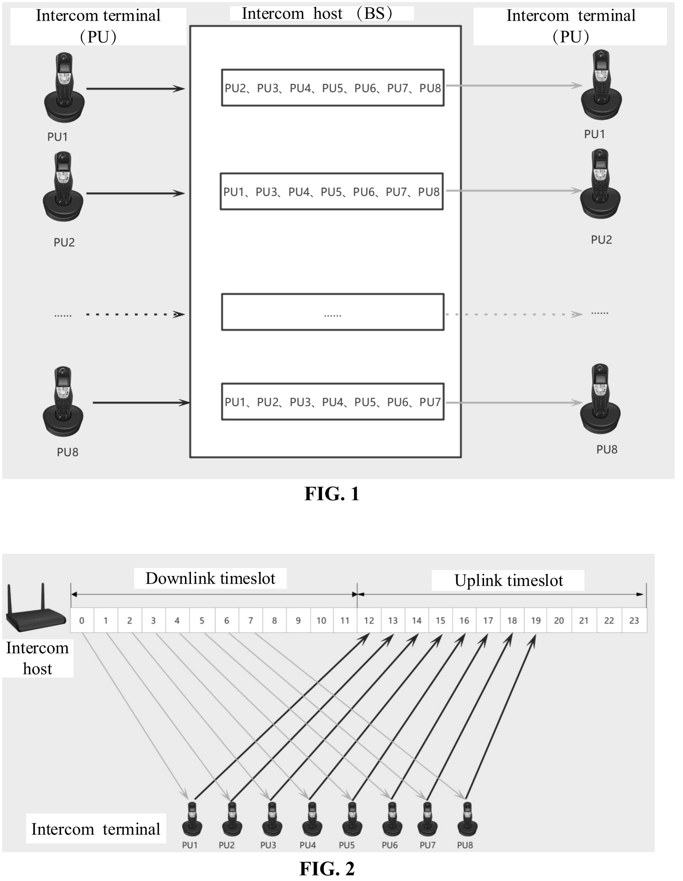

As shown in FIG. 1, which is an audio mixing logic of an existing wireless intercom system. Generally, the plurality of intercom terminals wirelessly connected to the intercom host may be divided into one or more talk groups. And intercom terminals in each of the talk groups may communicate to each other. It is assumed that a talk group includes an intercom host (BS) and eight intercom terminals (PU1-PU8), each of the intercom terminals only needs to hear voice signals collected by other intercom terminals in the same talk group, and does not need to hear the voice signal collected by the intercom terminal itself. Therefore, after each of the intercom terminals sends the voice signal collected by the intercom terminal itself to the intercom host, for each of the intercom terminals, the intercom host may perform audio mixing processing on the voice signals collected by other intercom terminals except the intercom terminal, and then deliver the mixed audio signal to the intercom terminal. For example, the intercom host receives the voice signals sent by the PU1-PU8, and for the PU1, may perform audio mixing processing on the voice signals sent by the PU2-PU7, and then return the mixed audio signal to the PU1, so that the PU1 plays back the mixed audio signal by a speaker. That is, a user using the PU1 can hear speech of other users in the group. Similarly, for other intercom terminals, the mixed audio signals of the other intercom terminals may also be obtained in a similar manner.

Generally, to ensure that each of the intercom terminals can be in a full-duplex communication mode, the plurality of intercom terminals may work in different communication timeslots in a time division manner. The voice signals sent by the intercom terminals to the intercom host are different, and each intercom terminal needs to occupy one uplink timeslot. And the mixed audio signals sent by the intercom host to each intercom terminal are also different, thus, each intercom terminal further needs to occupy one downlink timeslot. The number of timeslots of each data transmission frame is limited and each intercom terminal needs to occupy two timeslots, therefore, the number of intercom terminals supported by one intercom system is limited.

Taking the communication between the intercom host and the intercom terminals using the Digital Enhanced Cordless Telecommunications (DECT) technology as an example, the length of a complete DECT frame is 10 ms, and the 10 ms is equally divided into 24 timeslots. As shown in FIG. 2, which is a schematic diagram of DECT timeslot allocation, where the first 12 timeslots are timeslots in which the intercom host sends data and the intercom terminals receive data, and are referred to as downlink timeslots below. The last 12 timeslots are timeslots in which the intercom terminals send data and the intercom host receives data, and are referred to as uplink timeslots below. It can be learned from FIG. 2 that each of the intercom terminals needs to occupy one uplink timeslot to send the voice signal collected by the intercom terminal itself to the intercom host, and meanwhile, each of the intercom terminals further needs to occupy one downlink timeslot to receive, from the intercom host, the mixed audio signal obtained by performing audio mixing processing on the voice signals of other intercom terminals.

For each of the intercom terminals, one uplink timeslot and one downlink timeslot need to be allocated separately, resulting in a low utilization of the timeslots. The standard DECT frame is divided into 24 timeslots in total, except for the timeslots for transmitting state information and handover (switch for channel or frequency band), an intercom host in the prior art can support 10-way full-duplex wireless intercom terminals at most. At present, some large-scale activities have a gradually increasing demand for the number of intercom users supported by the intercom system, while the existing intercom system supports 10-way full-duplex wireless intercom terminals at most, and the number of intercom users cannot be expanded and cannot support more call demands. In addition, each intercom terminal needs to occupy one downlink timeslot, as the number of intercom terminals increases, transmission power consumption of the intercom host increases, i.e. power consumption of the intercom host increases as the number of intercom terminals increases. When the number of the intercom terminals is large, the battery power endurance of the intercom host is short.

Based on this, an intercom system is provided in an embodiment of this disclosure. Considering that in an existing intercom system, the intercom host needs to perform separate audio mixing processing for each intercom terminal to obtain the mixed audio signal corresponding to the intercom terminal, and one downlink timeslot needs to be separately allocated to the intercom host to transmit the mixed audio signal, resulting in relatively low overall timeslot utilization. Therefore, in this embodiment of the present disclosure, the audio mixing logic of the intercom host is modified. For the same talk group, after receiving the voice signals sent by each of the intercom terminals in the group, the intercom host may perform audio mixing processing on the voice signals sent by all of the intercom terminals in the group, to obtain a unified mixed audio signal, and then may broadcast the unified mixed audio signal to each of the intercom terminals in the group through one downlink timeslot. The mixed audio signal received by the intercom terminal may include the voice signal collected by the intercom terminal itself, and the intercom terminal does not need to play back the voice signal collected by itself. Thus, after receiving the mixed audio signal, the intercom terminal may perform audio elimination processing on the mixed audio signal, to eliminate the voice signal collected by itself, so that the intercom terminal can play back only the voice signals collected by other intercom terminals in the group.

Compared with that each intercom terminal needs to be allocated with one downlink timeslot separately, the intercom terminals in the same group may share one downlink timeslot in this manner, improving timeslot utilization. And more timeslots can be spared for use as uplink timeslots, that is, each intercom host can be connected to more intercom terminals, and the number of intercom users in the intercom system can be increased. In addition, for each of the talk groups, the intercom host only needs to transmit one-way mixed audio signal, which can also save the power consumption of the intercom host and prolong the usage duration of the battery.

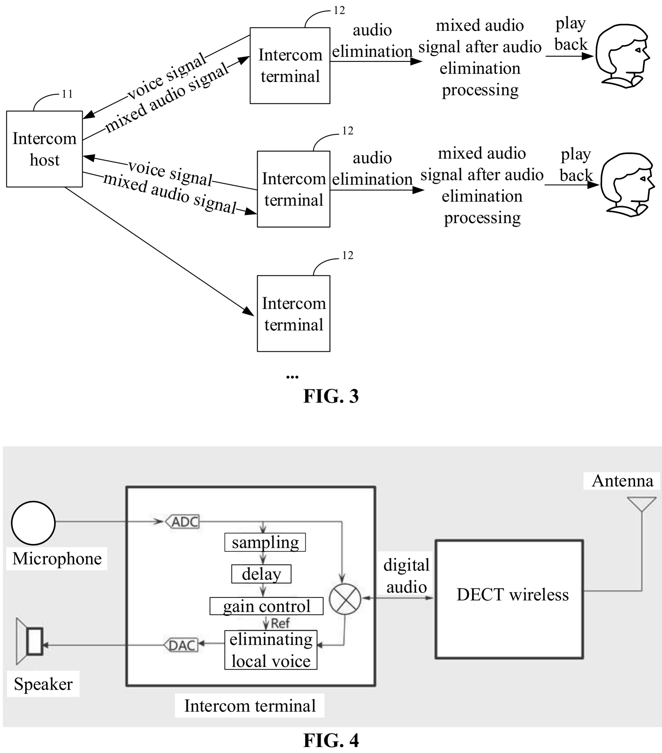

As shown in FIG. 3, which shows an intercom system according to an embodiment of this disclosure, where the intercom system includes an intercom host 11 and a plurality of intercom terminals 12, and the intercom host 11 is wirelessly connected to the plurality of intercom terminals 12 respectively. For example, the wireless communication between the intercom host 11 and the intercom terminal 12 may adopt a short-range communication manner such as WiFi, Bluetooth, ZigBee, or DECT. Or to ensure call quality of the intercom host 11 and the intercom terminal 12, the wireless communication between the intercom host 11 and the intercom terminal 12 may also be implemented by some customized private protocols, for example, the intercom host 11 and the intercom terminal 12 may work in independently allocated frequency bands, for example, a UHF frequency band, a 1.9 GHz DECT frequency band, and a 2.4G/5GHz ISM frequency band.

The plurality of intercom terminals 12 wirelessly connected to the intercom host 11 may be divided into one or more talk groups based on an actual requirement, where the intercom terminals 12 may communicate to each other only when they are located in the same talk group. When performing audio mixing processing, the intercom host 11 performs, in units of talk groups, audio mixing processing only on the voice signals collected by the intercom terminals 12 in the same talk group, and sends the mixed audio signal to each of the intercom terminals in the talk group.

In some embodiments, each of the intercom terminals 12 may include an audio collection unit, an audio playing unit, an audio processing unit, and a wireless transmission unit. The audio collection unit may be configured to collect the voice signal of the user, for example, may be a microphone. The audio playing unit may be configured to play back the voice signal, for example, may be a speaker. The audio processing unit may be configured to perform audio elimination processing on the mixed audio signal received from the intercom host 11, to eliminate the voice signal collected by the intercom terminal itself. The audio processing unit may be a DSP chip, an FPGA chip, or the like. The wireless transmission unit may be configured to wirelessly receive and send data, and the wireless transmission unit may be various wireless transmission modules. Certainly, in some scenarios, the audio processing unit and the wireless transmission unit may alternatively be integrated on a same chip.

Certainly, the intercom terminal 12 may further configure with other functional components according to an actual function requirement, and this is not limited in this embodiment of the disclosure.

Where each of at least part of the plurality of intercom terminals 12 may be configured to: collect the voice signal of the user, send the collected voice signal to the intercom host 11, and perform audio elimination processing on the mixed audio signal received from the intercom host 11, to eliminate the voice signal collected by the intercom terminal itself, and play back the mixed audio signal after the audio elimination processing.

For example, in some scenarios, the number of the intercom terminals 12 in the intercom system is small, so each of the intercom terminals 12 may have an allocated uplink timeslot, that is, all of the intercom terminals 12 may send the collected voice signal to the intercom host, thereby implementing both speaking and listening. In some scenarios, considering that the number of communication timeslots is limited, not all the intercom terminals can have an allocated uplink timeslot. Some users just need to listen to the voice of other users in the group without speaking, therefore, the intercom terminals 12 of these users can only listen to the others without having allocated uplink timeslots. That is, only some intercom terminals 12 in the plurality of intercom terminals connected to the intercom host 11 can implement both speaking and listening.

The intercom host 11 may receive the voice signals from the intercom terminals 12, perform, for each of the talk groups, audio mixing processing on the voice signals sent by the intercom terminals 12 in the talk group, to obtain the mixed audio signal, and broadcast the mixed audio signal to each of the intercom terminals 12 in the talk group.

The intercom host 11 may include a wireless transmission unit, configured to implement wireless receiving and transmitting of data. The intercom host 11 may also include an audio mixing processing unit, configured to implement the audio mixing processing of the voice signals.

In some scenarios, the intercom host 11 may include a plurality of audio mixing processing units, and each audio mixing processing unit may be configured to perform the audio mixing processing on the voice signals of the intercom terminals 12 in one talk group. The audio mixing processing unit may be integrated on a DSP chip or an FPGA chip, and one or more audio mixing processing units are disposed on the DSP chip or the FPGA chip.

Certainly, the intercom host 11 may further configure with other functional components according to an actual function requirement, and this is not limited in this embodiment of the disclosure.

After collecting the voice signal, the intercom terminal 12 sends the voice signal to the intercom host 11 for audio mixing processing, and then receives the mixed audio signal obtained after the audio mixing processing by the intercom host 11. Before playing back the mixed audio signal, the intercom terminal 12 may first perform audio elimination processing on the mixed audio signal, to eliminate the voice signal collected by the intercom terminal 12 itself. In some embodiments, to eliminate the voice signal collected by the intercom terminal 12 itself in the mixed audio signal, after collecting the voice signal of the user, the intercom terminal 12 may first perform sampling processing on the voice signal to obtain a sampled signal, where the sampled signal may be used as a reference to determine which voice signal in the mixed audio signal needs to be eliminated. Then, a target mixed audio signal including the voice signal may be acquired from the mixed audio signal returned by the intercom host. After gain processing with a certain amplitude is performed on the sampled signal, the sampled signal is superimposed on the target mixed audio signal to eliminate the voice signal in the target mixed signal. For example, the sampling signal and the voice signal in the target mixed audio signal are actually the same signal, so the sampling signal and the target mixed audio signal may be operated by using a reverse algorithm to eliminate the voice signal in the target mixed audio signal.

In some embodiments, to quickly and accurately acquire the target mixed audio signal including the voice signal from the mixed audio signal returned by the intercom host 11, a delay generated during the audio mixing processing performed by the intercom host 11 may be determined first, then the target mixed audio signal including the voice signal may be acquired from the mixed audio signal returned by the intercom host 11 based on the delay.

For example, as shown in FIG. 4, after collecting a voice signal A by using a microphone at time T1, the intercom terminal 12 may convert the collected analog voice signal A into a digital signal A by using an analog-to-digital converter (ADC), and then sample the digital voice signal A to obtain a sampled signal A'. Then, the digital voice signal A is sent to the intercom host 11 through the wireless transmission unit (for example, an DECT wireless transmission unit) for audio mixing processing, to obtain an mixed audio signal including the voice signal A. Considering that the delay generated by the audio mixing processing includes the duration t1 required for the intercom terminal 12 to transmit the collected voice signal to the intercom host 11, the duration t2 required for the intercom host 11 to perform the audio mixing processing, and the duration t3 required for the intercom host 11 to transmit the mixed audio signal to the intercom terminal 12. That is, the time at which the intercom terminal 12 receives the mixed audio signal including the voice signal A is T2 = T1+t1+t2+t3. Therefore, the intercom terminal 12 may receive the mixed audio signal (the digital signal) from the intercom host 11, then may acquire the mixed audio signal (i.e. the target mixed audio signal) received from the intercom host 11 at the time T2, and then may perform gain processing with a specific amplitude on the sampled signal A', then perform a specific reverse operation on the sampled signal and the target mixed audio signal, to eliminate the voice signal A in the target mixed audio signal by virtue of the sampled signal A', and then may convert the target voice signal after the audio elimination processing into an analog voice signal by using a digital-to-analog converter (DAC), and play back the analog voice signal by using a speaker.

The above t1 may be determined based on the uplink timeslot allocated to the intercom terminal, the above t3 may be determined based on the downlink timeslot allocated to the intercom terminal 12, and the t2 may be determined based on performance of the audio mixing processing unit.

Certainly, in an actual application, when the target mixed audio signal including the voice signal is acquired from the mixed audio signal returned by the intercom host 11, other manners may also be adopted besides the delay-based manner, for example, the mixed audio signal may be analyzed to determine whether a voice signal consistent with the sampled signal exists, and if the voice signal exists, it indicates that the mixed audio signal includes the voice signal.

In some embodiments, communication timeslots of the intercom host 11 and the plurality of intercom terminals 12 comprise a downlink timeslot, and the intercom host 11 broadcasts the mixed audio signal to the plurality of intercom terminals 12 through the downlink timeslot, where all of the intercom terminals 12 in a same talk group share one downlink timeslot. That is, after receiving the voice signals of the intercom terminals 12 in a talk group, the intercom host 11 may perform the audio mixing processing on the received voice signals to obtain the mixed audio signal, and then broadcast the mixed audio signal to each of the intercom terminals 12 in the group through one downlink timeslot, thereby saving timeslots and improving timeslot utilization.

Considering that in a same working scenario, different users have different function requirements for the intercom terminal 12. For example, some users speak more times during the whole working process, and it is necessary to ensure that the users can speak in real time. Some users are in a state of listening to speeches of other people most of the time during the whole working process, and the number of their speeches is relatively small. However, some users only need to listen to speeches of other people during the whole working process, and do not need to speak. In the prior art, all of the intercom terminals 12 in an intercom system use a full-duplex mode, resulting in a relatively limited number of the intercom terminals 12 connected in the intercom system.

In order to increase the number of the intercom terminals 12 that can be connected in the intercom system, different working modes may be configured for the intercom terminals 12 of the users according to requirements of different users. For example, when joining the intercom system, the intercom terminal 12 may first send a pairing request to the intercom host 11. And after receiving the pairing request, the intercom host 11 may establish a connection to the intercom terminal 12 and configure a working mode for the intercom terminal 12, where the working mode may include any one of: a full-duplex mode, a PTT mode, and a simplex mode.

For example, the intercom terminal 12 of the user that speaks more times during the whole working process and needs to ensure that it can speak in real time, may be configured into the full-duplex mode. The intercom terminal 12 in the full-duplex mode may be allocated one uplink timeslot (hereinafter referred to as a private uplink timeslot) separately, so that the intercom terminal 12 can collect the voice signal of the user at any time and send the voice signal to the intercom host 11 through the private uplink timeslot.

The intercom terminal 12 of the user who speaks occasionally throughout the whole working process may be configured into the PTT mode. All of the intercom terminals 12 in the PTT mode may share one or more uplink timeslots (hereinafter referred to as common uplink timeslots). When each of the intercom terminals 12 in the PTT mode wants to speak, an idle common uplink timeslot may be first requested from the intercom host 11, and then the collected voice signal of the user is sent to the intercom host 11 by using the common uplink timeslot. For the intercom terminal 12 in the PTT mode, when no common uplink timeslot is allocated to the intercom terminal 12, the intercom terminal 12 is in the simplex mode, that is, the intercom terminal 12 can only listen to, but cannot speak. After a common uplink timeslot is allocated to the intercom terminal 12, the intercom terminal 12 switches to the full-duplex mode, that is, the intercom terminal 12 can both listen to and speak.

For the intercom terminal 12 of the user who only needs to listen to others during the whole working process, the intercom terminal 12 may be configured into the simplex mode. The intercom terminal 12 in the simplex mode only shares one downlink timeslot with other intercom terminals 12 in the same group, and does not occupy an uplink timeslot, that is, the intercom terminal 12 in the simplex mode can only listen to speeches of others and cannot speak.

After the working mode of each intercom terminal 12 is configured, the timeslots may be allocated based on the working mode of each intercom terminal 12. For example, a downlink timeslot may be allocated to the intercom terminals 12 in each talk group, a private uplink timeslot may be allocated to the intercom terminal 12 in the full-duplex mode, and a common uplink timeslot may be allocated to the intercom terminal 12 in the PTT mode.

In some embodiments, the working modes corresponding to each of the intercom terminals 12 are determined based on a mode selection instruction of users. For example, in the process of completing the pairing between the intercom terminal 12 and the intercom host 11, the intercom host 11 may display a configuration interface of the working mode by using an interaction interface of the user, and the user may configure the working mode corresponding to the intercom terminal 11 in the configuration interface.

In some embodiments, the working mode corresponding to the intercom terminal 12 may also be dynamically adjusted based on the number of intercom terminals 12 currently connected to the intercom host 11 and the number of timeslots. For example, if the current number of timeslots is sufficient for each intercom terminal 12 in the intercom system to work in the full-duplex mode, all of the intercom terminals 12 are configured into the full-duplex mode.

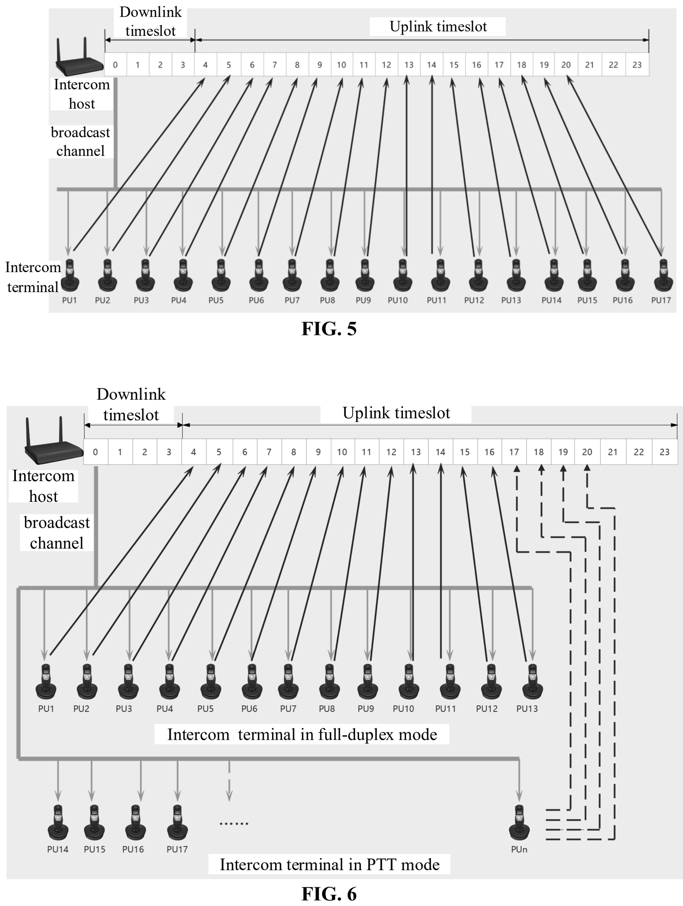

In some embodiments, the at least part of the intercom terminals 12 include one or more intercom terminals in the full-duplex mode. Communication timeslots of the intercom host 11 and the plurality of intercom terminals 12 include one or more private uplink timeslots, and each of the intercom terminals 12 in the full-duplex mode separately occupies one private uplink timeslot, and sends the voice signal collected by the intercom terminal 12 itself to the intercom host 11 through the private uplink timeslot. Because the intercom terminal 12 in the full-duplex mode separately occupies one uplink timeslot, the intercom terminal 12 may send the voice signal to the intercom host 11 at any time, that is, both speaking and listening at any time can be implemented. For example, as shown in FIG. 5, using the DECT technology for communication between the intercom host and the intercom terminals as an example, assuming that all of the intercom terminals 12 in the intercom system are one talk group, by using the solution of this disclosure, the number of intercom terminals 12 working in the full-duplex mode may be increased to 17.

Considering that even if the audio mixing processing logic in the intercom host 11 is improved, all of the intercom terminals 12 in the same talk group can share one downlink timeslot, more timeslots are spared for use as uplink timeslots, more intercom terminals 12 can be connected, but after all, the number of timeslots is limited, and the number of intercom terminals 12 is still limited. Considering that in an actual application scenario, some staff are in a state of listening to other people for most of the time and rarely speaking, and these users do not need to be in the full-duplex mode all the time, but only need to be in the full-duplex mode temporarily when needing to speak, and are allocated an uplink timeslot. Thus, in some embodiments, the at least part of the intercom terminals 12 include intercom terminals 12 in the PTT mode. Communication timeslots of the intercom host 11 and the plurality of intercom terminals 12 include one or more common uplink timeslots, and the intercom terminals 12 in the PTT mode may send the voice signals collected by the intercom terminals 12 themselves to the intercom host 11 through the common uplink timeslots temporarily allocated by the intercom host 11. For example, as shown in FIG. 6, the intercom terminals 12 (PU1-PU13) may work in the full-duplex mode, the intercom terminals 12 (PU14-PUn) may work in the PTT mode, and these intercom terminals 12 share four common timeslots (17-20).

For example, one or more communication timeslots may be reserved from the communication timeslots of the intercom host 11 and the plurality of intercom terminals 12 as the common uplink timeslots. The common uplink timeslots may be used by the intercom terminals 12 in the PTT mode together, and may be applied for from the intercom host 11 before use. For the intercom terminals 12 of some users who speak less, the intercom terminals 12 may be configured into the PTT mode. That is, when the user needs to speak, a control signal may be sent to the intercom terminal 12, so that the intercom terminal 12 temporarily applies for a common uplink timeslot from the intercom host 11, to transmit a currently collected voice signal of the user.

The number of common uplink timeslots may be flexibly adjusted according to the number of intercom terminals 12 in the PTT mode. For example, if the number of intercom terminals in the PTT mode is relatively large, more common uplink time slots can be set, and vice versa.

In some embodiments, the intercom terminal 12 may include a designated control component, and when a user using the intercom terminal 12 in the PTT mode wants to speak, a control signal may be input by the control component. For example, the control component may be a physical button on the intercom terminal 12 or a virtual button on the screen of the intercom terminal 12, and when the user wants to speak, the control component may be operated. After detecting a control signal input by the user through a specified control component, a timeslot allocation request may be sent to the intercom host 11. After receiving the timeslot allocation request, the intercom host 11 may allocate a common uplink timeslot to the intercom terminal 12 in the PTT mode according to the priority of the intercom terminal 12 in the PTT mode and/or the occupation conditions of the common uplink timeslots.

In some embodiments, the intercom host 11 may directly allocate a common uplink timeslot to the intercom terminal 12 based on the occupation conditions of the common uplink timeslots. For example, if there is currently an unoccupied common uplink timeslot, the unoccupied common uplink timeslot is directly allocated to the intercom terminal 12; otherwise, the timeslot allocation request is rejected.

In some embodiments, considering that in an actual application scenario, some users have higher priorities, that is, it needs to be ensured preferentially that these users can speak in time. Therefore, priorities may also be predetermined for the intercom terminals 12 in the PTT mode, and the intercom terminal 12 with a higher priority may preempt the common uplink timeslot occupied by the intercom terminal 12 with a lower priority. For example, when the intercom host 11 receives the timeslot allocation request of the intercom terminal 12 in the PTT mode, if it is determined that there are unoccupied common uplink timeslots currently, the intercom host 11 directly allocates one unoccupied common uplink timeslot to the intercom terminal 12 in the PTT mode. If it is determined that there is no unoccupied common uplink timeslot currently, it is determined whether a target intercom terminal exists in the intercom terminals 12 currently occupying the common uplink timeslots, where a priority of the target intercom terminal 12 is lower than the priority of the intercom terminal 12 in the PTT mode. If the target intercom terminal 12 exists, the common timeslot occupied by the target intercom terminal 12 is vacated to the intercom terminal 12 in the PTT mode. Certainly, if there is no target intercom terminal, the timeslot allocation request is rejected.

In this manner, for the intercom terminals 12 in the PTT mode, the common uplink timeslots may also be allocated to the intercom terminals 12 based on priorities of speaking of the users using the intercom terminals 12, to ensure that these users can speak in time.

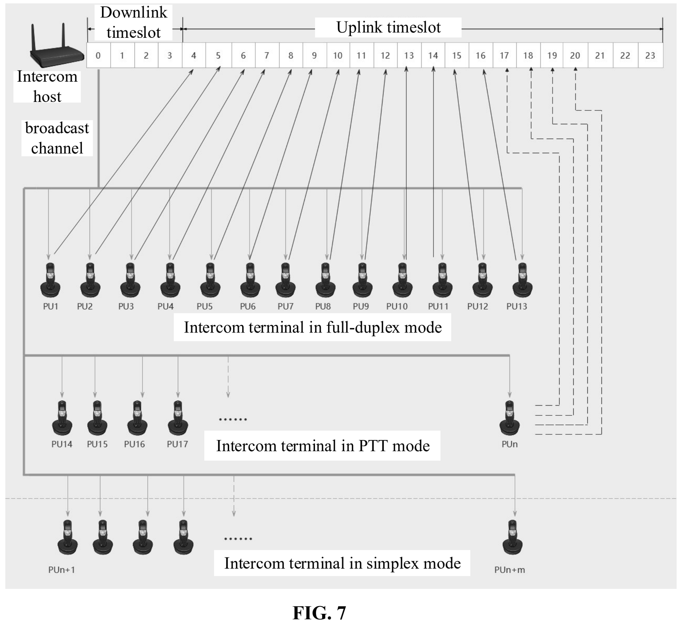

In some embodiments, the plurality of intercom terminals 12 further include intercom terminals 12 in the simplex mode. The intercom terminals 12 in the simplex mode are configured to receive the mixed audio signal sent by the intercom host 11 and play back the mixed audio signal. Considering that in some scenarios, some users only need to listen to speech of other users in the group, and do not need to speak. For such users, the intercom terminals 12 used by the users may be configured into the simplex mode, that is, there is no need to allocate uplink timeslots to the intercom terminals 12, and the intercom terminals 12 only need to receive the mixed audio signal from the intercom host 11 through the downlink timeslot shared with the other intercom terminals 12 in the group, to implement a function of listening only without speech. As shown in FIG. 7, the intercom terminals 12 (PU1-PU13) may work in the full-duplex mode, the intercom terminals 12 (PU14-PUn) may work in the PTT mode, and these intercom terminals 12 share four common timeslots (17-20). The intercom terminals 12 (PUn+1 - PUm) work in the simplex mode, and these intercom terminals do not need to occupy uplink timeslots.

In addition, an intercom host is further provided in the present disclosure, where the intercom host is communicatively connected to a plurality of intercom terminals respectively, and the plurality of intercom terminals are divided into one or more talk groups;

the intercom host is configured to: receive, voice signals collected by at least part of the plurality of intercom terminals; perform, for each of the talk groups, audio mixing processing on the voice signals sent by the intercom terminals in the talk group, to obtain an mixed audio signal; and send the mixed audio signal to each of the intercom terminals in the talk group, so that each of the at least part of the plurality of intercom terminals is further configured to perform audio elimination processing on a mixed audio signal received by the present intercom terminal to eliminate the voice signal collected by the present intercom terminal, and play back the mixed audio signal after the audio elimination processing.

In some embodiments, communication timeslots of the intercom host and the plurality of intercom terminals include a downlink timeslot, and the intercom host broadcasts the mixed audio signal to the plurality of intercom terminals through the downlink timeslot, where all of the intercom terminals in a same talk group share one downlink timeslot.

In some embodiments, the at least part of the plurality of intercom terminals include one or more intercom terminals in the full-duplex mode, communication timeslots of the intercom host and the plurality of intercom terminals include one or more private uplink timeslots, each of the intercom terminals in the full-duplex mode occupies one private uplink timeslot, and the intercom host is configured to receive the voice signals sent by the intercom terminals in the full-duplex mode through the private uplink timeslots.

In some embodiments, the at least part of the plurality of intercom terminals include one or more intercom terminals in the PTT mode, communication timeslots of the intercom host and the plurality of intercom terminals include one or more common uplink timeslots, and the intercom host is configured to: allocate, after receiving a timeslot allocation request sent by any one of the intercom terminals in the PTT mode, a common uplink timeslot to the intercom terminal in the PTT mode, based on a priority of the intercom terminal in the PTT mode and occupation conditions of the common uplink timeslots, and receive, the voice signal sent by the intercom terminal in the PTT mode through the common uplink timeslot.

In some embodiments, when the intercom host allocates the common uplink timeslot to the intercom terminal in the PTT mode, based on the priority of the intercom terminal in the PTT mode and the occupation conditions of the common uplink timeslots, the intercom host is specifically configured to:
allocate directly, in response to one or more unoccupied common uplink timeslots existing currently, one of the unoccupied common uplink timeslots to the intercom terminal in the PTT mode;
determine, in response to no unoccupied common uplink timeslot existing currently, whether a target intercom terminal exists in the intercom terminals currently occupying the common uplink timeslots, wherein a priority of the target intercom terminal is lower than the priority of the intercom terminal in the PTT mode; and
vacate, in response to the target intercom terminal existing, the common timeslot occupied by the target intercom terminal to the intercom terminal in the PTT mode.

In some embodiments, the intercom host is further configured to: establish, after receiving a pairing request of the intercom terminal, a connection with the intercom terminal, configure a working mode for the intercom terminal, and allocate a communication timeslot to the intercom terminal based on the configured working mode, where the working mode includes any one of: a full-duplex mode, a PTT mode, and a simplex mode.

In some embodiments, the working mode corresponding to each of the intercom terminals 12 is determined based on a mode selection instruction of the user.

For specific details of implementing each function by the intercom host, reference may be made to the description in the foregoing embodiments, and details are not described herein again.

In addition, an intercom terminal is further provided in an embodiment of the present disclosure, where the intercom terminal is communicatively connected to an intercom host;
the intercom terminal is configured to: collect a voice signal of a user, and send the voice signal to the intercom host, so that the intercom host performs audio mixing processing on received voice signals to obtain an mixed audio signal; and receive the mixed audio signal sent by the intercom host, perform audio elimination processing on the received mixed audio signal to eliminate the voice signal collected by the present intercom terminal, and play back the mixed audio signal after the audio elimination processing.

In some embodiments, when the intercom terminal performs the audio elimination processing on the received mixed audio signal to eliminate the voice signal collected by the present intercom terminal, the intercom terminal is specifically configured to:
perform sampling processing on the voice signal collected by the present intercom terminal to obtain a sampled signal;
acquire a target mixed audio signal including the voice signal from the mixed audio signal returned by the intercom host; and
perform gain processing on the sampled signal, and then superimpose the gained sampled signal into the target mixed audio signal to eliminate the voice signal in the target mixed audio signal.

In some embodiments, when the intercom terminal acquires the target mixed audio signal including the voice signal from the mixed audio signal returned by the intercom host, the intercom terminal is specifically configured to:
determine a delay generated during the intercom host performs the audio mixing processing; and
acquire, based on the delay, the target mixed audio signal including the voice signal from the mixed audio signal returned by the intercom host.

In some embodiments, in response to the intercom terminal being in a full-duplex mode, the intercom terminal occupies a private uplink timeslot, and sends the voice signal collected by the present intercom terminal to the intercom host through the private uplink timeslot.

In some embodiments, in response to the intercom terminal being in a PTT mode, the intercom terminal and other intercom terminals in the PTT mode share one or more common uplink timeslots;
the intercom terminal is configured to send a timeslot allocation request to the intercom host after detecting a control signal input by the user through a specified control component, so that the intercom host allocates, after receiving the timeslot allocation request, a common uplink timeslot to the intercom terminal, based on a priority of the intercom terminal and occupation conditions of the common uplink timeslots.

In some embodiments, in response to the intercom terminal being in a simplex mode, the intercom terminal is configured to receive the mixed audio signal broadcasted by the intercom host, and play back the mixed audio signal.

For specific details of implementing each function by the intercom terminal, reference may be made to the description in the foregoing embodiments, and details are not described herein again.

The various technical features in the above embodiments may be arbitrarily combined, as long as there is no conflict or contradiction between the combinations of the features, but they are not described one by one due to space limitation, so any combination of the various technical features in the above embodiments also falls within the scope of the present disclosure.

Other implementations of the embodiments of the specification will be apparent to those skilled in the art from consideration of the specification and practice of the specification disclosed herein. The embodiments of the present disclosure are intended to cover any variations, uses, or adaptations of the embodiments of the present disclosure, and these variations, uses, or adaptations follow the general principles of the embodiments of the present disclosure and include common knowledge or conventional technical means in the art that are not disclosed in the embodiments of the present disclosure. It is intended that the specification and examples be considered as exemplary only, with a true scope and spirit of the embodiments being indicated by the following claims.

It should be understood that the embodiments of the present specification are not limited to the precise structures described above and shown in the accompanying drawings, and various modifications and changes can be made without departing from the scope thereof. The scope of the embodiments of the present disclosure is limited only by the appended claims.

The above description is only preferred embodiments of the present disclosure and is not intended to limit the present disclosure, and any modifications, equivalent substitutions, improvements and the like made within the spirit and principle of the present disclosure should be included within the scope of the present disclosure.

## Claims

1. An intercom system, comprising an intercom host and a plurality of intercom terminals, wherein the intercom host is wirelessly connected to the plurality of intercom terminals respectively, and the plurality of intercom terminals are divided into one or more talk groups;
at least part of the plurality of intercom terminals are configured to collect voice signals of users, and send the voice signals to the intercom host;
the intercom host is configured to perform, for each of the talk groups, audio mixing processing on the voice signals sent by the intercom terminals in the talk group, to obtain a mixed audio signal, and send the mixed audio signal to each of the intercom terminals in the talk group;
each of the at least part of the plurality of intercom terminals is further configured to perform audio elimination processing on a mixed audio signal received by the present intercom terminal to eliminate the voice signal collected by the present intercom terminal, and play back the mixed audio signal after the audio elimination processing.

2. The intercom system according to claim 1, wherein when each of the at least part of the plurality of intercom terminals performs the audio elimination processing on the mixed audio signal received by the present intercom terminal to eliminate the voice signal collected by the present intercom terminal, the intercom terminal is specifically configured to:
perform sampling processing on the voice signal collected by the present intercom terminal to obtain a sampled signal;
acquire a target mixed audio signal comprising the voice signal from the mixed audio signal returned by the intercom host; and
perform gain processing on the sampled signal, and then superimpose the gained sampled signal into the target mixed audio signal to eliminate the voice signal in the target mixed audio signal.

3. The intercom system according to claim 2, wherein when each of the at least part of the plurality of intercom terminals acquires the target mixed audio signal comprising the voice signal from the mixed audio signal returned by the intercom host, the intercom terminal is specifically configured to:
determine a delay generated during the intercom host performs the audio mixing processing; and
acquire, based on the delay, the target mixed audio signal comprising the voice signal from the mixed audio signal returned by the intercom host.

4. The intercom system according to any one of claims 1-3, wherein communication timeslots of the intercom host and the plurality of intercom terminals comprise a downlink timeslot, and the intercom host broadcasts the mixed audio signal to the plurality of intercom terminals through the downlink timeslot, wherein all of the intercom terminals in a same talk group share one downlink timeslot.

5. The intercom system according to any one of claims 1-4, wherein the at least part of the plurality of intercom terminals comprise one or more intercom terminals in a full-duplex mode, communication timeslots of the intercom host and the plurality of intercom terminals comprise one or more private uplink timeslots, each of the intercom terminals in the full-duplex mode occupies one private uplink timeslot, and sends the voice signal collected by the present intercom terminal to the intercom host through the private uplink timeslot.

6. The intercom system according to any one of claims 1-5, wherein the at least part of the plurality of intercom terminals comprise one or more intercom terminals in a PTT mode, communication timeslots of the intercom host and the plurality of intercom terminals comprise one or more common uplink timeslots, and each of the intercom terminals in the PTT mode is configured to send the voice signal collected by the present intercom terminal to the intercom host through the common uplink timeslot temporarily allocated by the intercom host.

7. The intercom system according to claim 6, wherein a number of the common uplink timeslots is positively correlated with a number of the intercom terminals in the PTT mode.

8. The intercom system according to claim 6 or 7, wherein each of the intercom terminals in the PTT mode is configured to send a timeslot allocation request to the intercom host after detecting a control signal input by the user through a specified control component; and the intercom host is configured to allocate, after receiving the timeslot allocation request, a common uplink timeslot to the intercom terminal in the PTT mode, based on a priority of the intercom terminal in the PTT mode and occupation conditions of the common uplink timeslots.

9. The intercom system according to claim 8, wherein when the intercom host allocates the common uplink timeslot to the intercom terminal in the PTT mode, based on the priority of the intercom terminal in the PTT mode and the occupation conditions of the common uplink timeslots, the intercom host is specifically configured to:
allocate directly, in response to one or more unoccupied common uplink timeslots existing currently, one of the unoccupied common uplink timeslots to the intercom terminal in the PTT mode;
determine, in response to no unoccupied common uplink timeslots existing currently, whether a target intercom terminal exists in the intercom terminals currently occupying the common uplink timeslots, wherein a priority of the target intercom terminal is lower than the priority of the intercom terminal in the PTT mode; and
vacate, in response to the target intercom terminal existing, the common timeslot occupied by the target intercom terminal to the intercom terminal in the PTT mode.

10. The intercom system according to any one of claims 1-9, wherein the plurality of intercom terminals further comprise one or more intercom terminals in a simplex mode, and the intercom terminals in the simplex mode are configured to receive the mixed audio signal sent by the intercom host, and play back the mixed audio signal.

11. The intercom system according to any one of claims 1-10, wherein the intercom host is further configured to: establish, after receiving a pairing request of the intercom terminal, a connection with the intercom terminal, configure a working mode for the intercom terminal, and allocate a communication timeslot to the intercom terminal based on the configured working mode, wherein the working mode comprises any one of: a full-duplex mode, a PTT mode, and a simplex mode.

12. The intercom system according to claim 11, wherein the working mode corresponding to each of the intercom terminals is determined based on a mode selection instruction of the user.

13. An intercom host, wherein the intercom host is communicatively connected to a plurality of intercom terminals respectively, and the plurality of intercom terminals are divided into one or more talk groups;
the intercom host is configured to: receive, voice signals collected by at least part of the plurality of intercom terminals; perform, for each of the talk groups, audio mixing processing on the voice signals sent by the intercom terminals in the talk group, to obtain an mixed audio signal; and send the mixed audio signal to each of the intercom terminals in the talk group, so that each of the at least part of the plurality of intercom terminals is configured to perform audio elimination processing on a mixed audio signal received by the present intercom terminal to eliminate the voice signal collected by the present intercom terminal, and play back the mixed audio signal after the audio elimination processing.

14. The intercom host according to claim 13, wherein communication timeslots of the intercom host and the plurality of intercom terminals comprise a downlink timeslot, and the intercom host broadcasts the mixed audio signal to the plurality of intercom terminals through the downlink timeslot, wherein all of the intercom terminals in a same talk group share one downlink timeslot.

15. The intercom host according to claim 13, wherein the at least part of the plurality of intercom terminals comprise one or more intercom terminals in a full-duplex mode, communication timeslots of the intercom host and the plurality of intercom terminals comprise one or more private uplink timeslots, each of the intercom terminals in the full-duplex mode occupies one private uplink timeslot, and the intercom host is configured to receive the voice signals sent by the intercom terminals in the full-duplex mode through the private uplink timeslots.

16. The intercom host according to claim 13, wherein the at least part of the plurality of intercom terminals comprise one or more intercom terminals in a PTT mode, communication timeslots of the intercom host and the plurality of intercom terminals comprise one or more common uplink timeslots, and the intercom host is configured to: allocate, after receiving a timeslot allocation request sent by any one of the intercom terminals in the PTT mode, a common uplink timeslot to the intercom terminal in the PTT mode, based on a priority of the intercom terminal in the PTT mode and occupation conditions of the common uplink timeslots, and receive, the voice signal sent by the intercom terminal in the PTT mode through the common uplink timeslot.

17. The intercom host according to claim 16, wherein when the intercom host allocates the common uplink timeslot to the intercom terminal in the PTT mode, based on the priority of the intercom terminal in the PTT mode and the occupation conditions of the common uplink timeslots, the intercom host is specifically configured to:
allocate directly, in response to one or more unoccupied common uplink timeslots existing currently, one of the unoccupied common uplink timeslots to the intercom terminal in the PTT mode;
determine, in response to no unoccupied common uplink timeslots existing currently, whether a target intercom terminal exists in the intercom terminals currently occupying the common uplink timeslots, wherein a priority of the target intercom terminal is lower than the priority of the intercom terminal in the PTT mode; and
vacate, in response to the target intercom terminal existing, the common timeslot occupied by the target intercom terminal to the intercom terminal in the PTT mode.

18. The intercom host according to claim 13, wherein the intercom host is further configured to: establish, after receiving a pairing request of the intercom terminal, a connection with the intercom terminal, configure a working mode for the intercom terminal, and allocate a communication timeslot to the intercom terminal based on the configured working mode, wherein the working mode comprises any one of: a full-duplex mode, a PTT mode, and a simplex mode.

19. The intercom system according to claim 18, wherein the working mode corresponding to each of the intercom terminals is determined based on a mode selection instruction of the user.

20. An intercom terminal, wherein the intercom terminal is communicatively connected to an intercom host;
the intercom terminal is configured to: collect a voice signal of a user, and send the voice signal to the intercom host, so that the intercom host performs audio mixing processing on received voice signals to obtain an mixed audio signal; and receive the mixed audio signal sent by the intercom host, perform audio elimination processing on the received mixed audio signal to eliminate the voice signal collected by the present intercom terminal, and play back the mixed audio signal after the audio elimination processing.

21. The intercom terminal according to claim 20, wherein when the intercom terminal performs the audio elimination processing on the received mixed audio signal to eliminate the voice signal collected by the present intercom terminal, the intercom terminal is specifically configured to:
perform sampling processing on the voice signal collected by the present intercom terminal to obtain a sampled signal;
acquire a target mixed audio signal comprising the voice signal from the mixed audio signal returned by the intercom host; and
perform gain processing on the sampled signal, and then superimpose the gained sampled signal into the target mixed audio signal to eliminate the voice signal in the target mixed audio signal.

22. The intercom terminal according to claim 21, wherein when the intercom terminal acquires the target mixed audio signal comprising the voice signal from the mixed audio signal returned by the intercom host, the intercom terminal is specifically configured to:
determine a delay generated during the intercom host performs the audio mixing processing; and
acquire, based on the delay, the target mixed audio signal comprising the voice signal from the mixed audio signal returned by the intercom host.

23. The intercom terminal according to claim 21, wherein in response to the intercom terminal being in a full-duplex mode, the intercom terminal occupies a private uplink timeslot, and sends the voice signal collected by the present intercom terminal to the intercom host through the private uplink timeslot.

24. The intercom terminal according to claim 21, wherein in response to the intercom terminal being in a PTT mode, the intercom terminal and other intercom terminals in the PTT mode share one or more common uplink timeslots;
the intercom terminal is configured to send a timeslot allocation request to the intercom host after detecting a control signal input by the user through a specified control component, so that the intercom host allocates, after receiving the timeslot allocation request, a common uplink timeslot to the intercom terminal, based on a priority of the intercom terminal and occupation conditions of the common uplink timeslots.

25. The intercom terminal according to claim 21, wherein in response to the intercom terminal being in a simplex mode, the intercom terminal is configured to receive the mixed audio signal broadcasted by the intercom host, and play back the mixed audio signal.
